# EUROPÄISCHE PATENTSCHRIFT

(11) **EP 4 611 944 B1**
(45) Veröffentlichungstag und Bekanntmachung des Hinweises auf die Patenterteilung: **21.01.2026**
(21) Anmeldenummer: 24720717.8
(22) Anmeldetag: 12.04.2024
(51) Int. Cl.: B07B 7/01, B07B 7/06, B29B 17/02, B29B 13/00

(54) **VERFAHREN ZUM REINIGEN VON SCHÜTTGUTMATERIAL UND ABSCHEIDEVORRICHTUNG**
METHOD FOR CLEANING BULK MATERIAL AND SEPARATION DEVICE
PROCÉDÉ DE NETTOYAGE DE MATÉRIAUX EN VRAC ET DISPOSITIF DE SÉPARATION

(30) Priorität: 14.04.2023 AT 5006023 U
(43) Veröffentlichungstag der Anmeldung: 10.09.2025
(73) Patentinhaber: Wittmann Technology GmbH, 1220 Wien (AT)
(72) Erfinder: FUX, Erhard, 3451 Michelhausen (AT)
(74) Vertreter: SONN Patentanwälte GmbH & Co KG
(86) Internationale Anmeldenummer: PCT/AT2024/060141
(87) Internationale Veröffentlichungsnummer: WO 2024/211947

(56) Entgegenhaltungen:
- WO-A1-03/037534

## Beschreibung

Die Erfindung betrifft ein Verfahren zum Reinigen von verunreinigtem Schüttgutmaterial, vorzugsweise Kunststoffschüttgutmaterial, insbesondere Rezyklat, in einer Abscheidevorrichtung mit einer Reinigungskammer mit den folgenden Schritten:
i) Ansaugen des verunreinigten Schüttgutmaterials über einen Einlassstutzen der Abscheidevorrichtung und dadurch Fördern des verunreinigten Schüttgutmaterials in einen vorzugsweise zumindest teilweise konisch geformten Einlassbereich der Reinigungskammer während einer Fördersequenz;
ii) Ansaugen eines Fluids, insbesondere Luft, durch den Einlassstutzen während einer an die Fördersequenz anschließenden optionalen Leersaugsequenz, insbesondere um den Einlassstutzen und eine Ansaugleitung von möglichen Rückständen des verunreinigten Schüttgutmaterials zu leeren, wobei die Fördersequenz und vorzugsweise die optionale Leersaugsequenz eine Förderphase bilden; und
iii) Ausgeben des gereinigten Schüttgutmaterials durch eine Auslassöffnung während einer Entleerungssequenz nach Beendigung der Förderphase.

Des Weiteren betrifft die Erfindung eine Abscheidevorrichtung zum Reinigen von verunreinigtem Schüttgutmaterial, aufweisend:
eine Reinigungskammer mit einem vorzugsweise zumindest teilweise konisch geformten Einlassbereich;
einen Einlassstutzen, der in den Einlassbereich führt; und
eine vorzugsweise durch eine Klappe verschließbare Auslassöffnung,
wobei die Abscheidevorrichtung dazu eingerichtet ist, in einer Fördersequenz, in der das verunreinigte Schüttgutmaterial durch den Einlassstutzen in den Einlassbereich durch Ansaugen gefördert wird, in einer optionalen Leersaugsequenz, in der ein Fluid, insbesondere Luft, durch den Einlassstutzen angesaugt wird, und in einer Entleerungssequenz, in der gereinigtes Schüttgutmaterial durch die Auslassöffnung ausgegeben wird, betrieben zu werden, wobei die Fördersequenz und vorzugsweise die optionale Leersaugsequenz eine Förderphase bilden.

Bei der Herstellung von Kunststofferzeugnissen wird immer häufiger recyceltes Kunststoffmaterial eingesetzt, welches jedoch durch Staub und Feinanteile verunreinigt sein kann. Die Verunreinigung kann unter anderem beim Zerschneiden des recycelten Kunststoffmaterials in Schneidemühlen entstehen. Der Staub und die Feinanteile können bei Herstellung von Kunststofferzeugnissen zu Qualitätsproblemen führen. Beispielsweise kann es beim Aufschmelzen des Kunststoffmaterials zu einer Verkokung kommen. Zudem zeigen Feinanteile im Kunststoffmaterial ein anderes Schmelzverhalten als das eigentliche Kunststoffmaterial, wodurch es zu einer unregelmäßigen Verteilung in der Kunststoffschmelze kommt und im fertigen Kunststofferzeugnis teilweise Schlieren zu sehen sind. Bevor das recycelte Kunststoffmaterial durch kunststoffverarbeitende Maschinen weiterverarbeitet werden kann, muss dieses zur Einhaltung von Qualitätsvorgaben daher gereinigt werden.

Aus dem Stand der Technik sind Materialabscheider der eingangs erwähnten Art bekannt, bei denen ein Absaugmodul über eine kurze Strecke von typischerweise weniger als 300 mm Staub- und Feinteile aus einem vorbeiströmenden Kunststoffmaterial absaugt. Nachdem das Kunststoffmaterial das Absaugmodul passiert hat, landet das Kunststoffmaterial in einem Behälter. Aufgrund der relativ kurzen Strecke, entlang der Verunreinigungen des vorbeiströmenden Kunststoffmaterials abgesaugt werden, wird das Kunststoffmaterial nicht vollständig gereinigt und weist noch hohe Anteile an Staub und Feinteilen auf. Um einen höheren Reinigungsgrad zu erreichen, müsste der Vorgang mehrmals wiederholt werden, was insbesondere bei eng getakteten Herstellungsprozessen zu einem erhöhten Aufwand bzw. geringerem Materialdurchsatz führen kann.

Die WO 03/037534 A1 offenbart ein Verfahren und eine Vorrichtung zum Reinigen bzw. Trennen von leichterem Material, wie etwa Staub, von schwererem Granulat. Das verunreinigte Granulat wird über einen Einlassstutzen eingebracht und über ein Umlenkrohr in einen Einlassbereich der Reinigungskammer gefördert. Das verunreinigte Granulat wird nach oben in einen konisch zusammenlaufenden Trichterteil gefördert. Dabei fallen erste schwere Bestandteile des Granulats nach unten. Leichteres, weiterhin zumindest teilweise verunreinigtes Granulat gelangt weiter nach oben in einen oberen Kammerbereich, wo sich eine Verteilplatteneinrichtung befindet. Dort wird das übrig gebliebene zu reinigende Granulat mehrfach abgelenkt und noch weiter nach oben transportiert. Dabei fallen sukzessive schwerere, abgebremste Teile des Granulats nach unten, während leichtere Bestandteile, wie eben Staub, nach oben gesogen werden. Der Staub tritt letztlich ganz oben durch eine Öffnung aus der Abscheidevorrichtung aus. Das gereinigte Granulat sammelt sich im unteren Bereich und wird durch eine Auslassöffnung der Abscheidevorrichtung ausgegeben.

Im Lichte dieser Ausführungen ist es Aufgabe der vorliegenden Erfindung, die Nachteile des Standes der Technik zumindest teilweise zu lindern. Vorzugsweise ist es Aufgabe der vorliegenden Erfindung, ein Verfahren und eine Abscheidevorrichtung der eingangs erwähnten Art zur Verfügung zu stellen, mit denen eine verbesserte Reinigung von Schüttgutmaterial ermöglicht wird. Vorzugsweise soll dabei die Zeit zur Reinigung des Schüttgutmaterials nicht verlängert werden.

Gelöst wird diese Aufgabe durch ein Verfahren zum Reinigen von verunreinigtem Schüttgutmaterial gemäß Anspruch 1 und durch eine Abscheidevorrichtung gemäß Anspruch 9. Ein Verfahren zum Herstellen eines Kunststofferzeugnisses ist in Anspruch 8 angegeben. Eine Anlage zum Herstellen eines Kunststofferzeugnisses ist in Anspruch 15 definiert.

Erfindungsgemäß ist bei einem Verfahren der eingangs erwähnten Art vorgesehen, dass das verunreinigte Schüttgutmaterial durch Ansaugen während der Förderphase von dem Einlassbereich in einen vorzugsweise zumindest teilweise konisch geformten Umwälzbereich der Reinigungskammer gefördert und in dem Umwälzbereich durch das Ansaugen fortwährend bis zur Entleerungssequenz umgewälzt und dadurch gereinigt wird, wobei Verunreinigungen, die sich von dem verunreinigten Schüttgutmaterial lösen, aus dem Umwälzbereich durch das Ansaugen des verunreinigten Schüttgutmaterials während der Förderphase über eine Absaugöffnung abgesaugt werden. Vorteilhafterweise wird durch das fortwährende Umwälzen während der Fördersequenz und der optionalen Leersaugsequenz das Schüttgutmaterial in dem Umwälzbereich gründlich gereinigt, ohne insgesamt die Dauer des Reinigungszyklus, bestehend aus Fördersequenz, optionaler Leersaugsequenz und Entleerungssequenz, zu verlängern. Dadurch kann das Verfahren und die Abscheidevorrichtung in eine bestehende Anlage integriert werden, ohne aufwendige Anpassungen vornehmen zu müssen. Das Umwälzen erfolgt dabei durch Ansaugen des Schüttgutmaterials. Das Ansaugen des Schüttgutmaterials erfolgt vorzugsweise durch Erzeugen eines Vakuums oder eines Unterdrucks. Auch das optionale Ansaugen des Fluids kann bei einer Ausführungsform ebenfalls durch ein Vakuum bzw. durch einen Unterdruck erfolgen. Durch das Umwälzen können sich Staub- und Feinteilpartikel besser vom zu reinigenden Schüttgutmaterial lösen und anschließend abgesaugt werden. Im Unterschied zum Stand der Technik wird das Schüttgutmaterial während der gesamten Förderphase und damit über einen längeren Zeitraum gereinigt. In die Abscheidevorrichtung gefördertes Schüttgutmaterial bleibt demnach nicht einfach liegen, während weiteres Material in der Fördersequenz nachströmt oder in der optionalen Leersaugsequenz ein Fluid, insbesondere Luft, nachgesaugt wird, sondern wird ständig bis zur Entleerungssequenz umgewälzt und dadurch von Staub- und Feinteilpartikeln gereinigt. Die Fördersequenz, die optionale Leersaugsequenz und die Entleerungssequenz bilden zusammen einen Reinigungszyklus, innerhalb dessen eine bestimmte Menge an Schüttgutmaterial gereinigt und abgegeben wird. Bei dem Schüttgutmaterial handelt es sich vorzugsweise um ein Kunststoffschüttgutmaterial, insbesondere um recyceltes Kunststoffschüttgutmaterial, auch Rezyklat genannt. Das Kunststoffschüttgutmaterial kann zum Beispiel aus erdölbasierten Polymeren oder Biopolymeren bestehen. Das Schüttgutmaterial kann beispielsweise in Form von Granulat, Körner, Schnipsel, Folienstücken oder Pulver vorliegen. Die Abscheidevorrichtung besitzt eine Reinigungskammer, in die das Schüttgutmaterial gesaugt und in der das Schüttgutmaterial anschließend gereinigt wird. Vorzugsweise ist die Reinigungskammer im Wesentlichen rotationssymmetrisch ausgebildet. Die Reinigungskammer kann zumindest abschnittsweise eine zylindermandelförmige Außenwandung aufweisen. Der Einlassbereich und der Umwälzbereich sind innerhalb der Reinigungskammer angeordnet. Der Umwälzbereich und der Einlassbereich können räumlich voneinander getrennt sein, beispielsweise durch eine Wand. Es können auch mehrere Umwälzbereiche und/oder Einlassbereiche vorgesehen sein. Wenn mehrere Umwälzbereiche und/oder Einlassbereiche vorgesehen sind, können diese ebenfalls räumlich voneinander getrennt sein, beispielsweise durch eine Wand. Die Reinigungskammer kann zumindest teilweise aus transparentem Material gefertigt sein, um in den Einlassbereich und den Umwälzbereich sehen zu können. Bevorzugt ist der Umwälzbereich zumindest teilweise oberhalb des Einlassbereichs angeordnet. Der Umwälzbereich kann beispielsweise ein Volumen von 1 l bis 80 l aufweisen. Der Einlassbereich kann beispielsweise ein Volumen von 0,5 l bis 20 l aufweisen. In Schritt i) wird das verunreinigte Schüttgutmaterial während der Fördersequenz über einen Einlassstutzen der Abscheidevorrichtung angesaugt und dadurch in einen Einlassbereich der Reinigungskammer gefördert. Das Ansaugen erfolgt durch Erzeugung eines Unterdrucks. Das Schüttgutmaterial kann beispielsweise mit feinteiligen, insbesondere feinkörnigen, oder pulverförmigen Partikeln verunreinigt sein. In der Förderphase wird hauptsächlich Schüttgutmaterial, aber auch Fluid, insbesondere Luft, angesaugt. Der Einlassbereich kann zumindest teilweise konisch geformt sein. Das verunreinigte Schüttgutmaterial kann in einem Reservoir außerhalb der Reinigungskammer gelagert sein und von dort beispielsweise über eine Ansaugleitung, insbesondere ein Rohr oder einen Schlauch, angesaugt werden. Eine Dosiervorrichtung, beispielsweise eine Klappe oder ein Ventil, kann dazu eingerichtet sein, nur eine bestimmte Menge an gehäuftem verunreinigtem Schüttgutmaterial in der Fördersequenz für die Ansaugung in den Einlassbereich freizugeben. Der Einlassstutzen kann beispielsweise parallel oder rechtwinkelig zu einer tangentialen Umfangsrichtung der Reinigungskammer angeordnet sein. Im Allgemeinen kann der Einlassstutzen in einem beliebigen Winkel zur Außenwandung der Reinigungskammer angeordnet sein, solange die Zufuhr von Schüttgutmaterial ermöglicht wird. Im Einlassbereich kann das angesaugte verunreinigte Schüttgutmaterial durch Verwirbelung zumindest teilweise vereinzelt werden. Vorzugsweise ist der Einlassbereich zumindest teilweise konisch geformt, um den Strom des verunreinigten Schüttgutmaterials zu lenken. Durch eine zumindest teilweise konische Form kann das Schüttgutmaterial entlang der Innenwandung des Einlassbereichs geführt und teilweise verwirbelt und abgebremst werden, wodurch sich bereits erste Staub- und Feinteilpartikel lösen können. Um den Einlassstutzen und die Ansaugleitung von möglicherweise zurückgebliebenen Schüttgutmaterial freizubekommen, sodass dieses nicht zurückfällt und zu Verstopfungen in der Ansaugleitung bzw. dem Ansaugstutzen führt, ist in Schritt ii) optional vorgesehen, dass ein Fluid, insbesondere Luft, während einer an die Fördersequenz anschließenden optionalen Leersaugsequenz angesaugt wird. In der Leersaugsequenz wird kein neues Schüttgutmaterial von dem Reservoir des verunreinigten Schüttgutes entnommen bzw. angesaugt, sondern allenfalls nur Rückstände in der Ansaugleitung bzw. in dem Ansaugstutzen durch Ansaugen des Fluids ebenfalls in den Einlassbereich gefördert. Als angesaugtes Fluid kann insbesondere Umgebungsluft dienen. Während der Fördersequenz und vorzugsweise der optionalen Leersaugsequenz, die zusammen die Förderphase bilden, erfolgt erfindungsgemäß ein Ansaugen und dadurch Fördern des verunreinigten Schüttgutmaterials von dem Einlassbereich in einen Umwälzbereich der Reinigungskammer. Wenn keine Leersaugsequenz vorgesehen ist, wird die Förderphase alleine durch die Fördersequenz gebildet. Auf eine Leersaugsequenz kann beispielsweise bei kurzen Längen der Ansaugleitung verzichtet werden. Der Umwälzbereich kann zumindest teilweise konisch geformt sein. Schüttgutmaterial kann bereits in der Fördersequenz in den Umwälzbereich gelangen. Spätestens in der optionalen Leersaugsequenz wird der überwiegende Großteil des Schüttgutmaterials in den Umwälzbereich gesaugt. Durch das Ansaugen von Fluid in der Förderphase wird im Wesentlichen das gesamte in dem Einlassbereich befindliche Schüttgutmaterial in den Umwälzbereich gefördert. Nur kleine Rückstände können vereinzelt in dem Einlassbereich bleiben. Während der Förderphase erfolgt ein fortwährendes Umwälzen und dadurch reinigen des Schüttgutmaterials innerhalb des Umwälzbereichs durch das Ansaugen. Das Umwälzen erfolgt vorzugsweise durch einen nach oben gerichteten Ansaugfluidstrom, der das Schüttgutmaterial nach oben zieht, von wo aus es von nachkommendem Schüttgutmaterial verdrängt wird und wieder nach unten fällt. Durch das Umwälzen lösen sich Staubund Feinteilpartikel, die abgesaugt werden können. Damit kein Schüttgutmaterial mit den gelösten Verunreinigungen abgesaugt wird, kann ein Gitter, vorzugsweise ein insbesondere auswechselbares Drahtsieb, vorgesehen sein, dessen Öffnungsweite geringer ist als beispielsweise die für eine nachfolgende Plastifizierung geeignete kleinste Granulatgröße. Durch die Öffnungsweite wird die Grenze zwischen Schüttgutmaterial und Staub- bzw. Feinteilpartikel festgelegt. Die Öffnungsweite bezeichnet den maximalen Durchmesser einer Gitteröffnung. Die Stärke des Ansaugfluidstromes kann derart gewählt werden, dass das Schüttgutmaterial nicht die gesamte Zeit bis zur Entleerungssequenz über an das Gitter gesaugt wird und sich nicht mehr löst. Der Ansaugfluidstrom kann ein im Wesentlichen konstanter Fluidstrom, beispielsweise ein Fluidstrom mit einer Stärke zwischen 50 m³/h und 400 m³/h, vorzugsweise zwischen 100 m³/h und 300 m³/h, bei einem Beispiel von im Wesentlichen 200 m³/h, sein. Die Stärke des Ansaugfluidstroms kann unter anderem von der Art des Schüttgutmaterials und der Länge sowie dem Querschnitt der Ansaugleitung abhängig sein. Während das Schüttgutmaterial umgewälzt wird, werden Verunreinigungen, die sich von dem verunreinigten Schüttgutmaterial lösen, abgesaugt. Das Ansaugen des Schüttgutmaterials bzw. Absaugen der Verunreinigungen erfolgt bevorzugt durch dieselbe Ansaugvorrichtung, die insbesondere im Umwälzbereich angeschlossen sein kann. Durch das Ansaugen bzw. Absaugen entsteht ein Fluidstrom vom Ansaugstutzen und einer gegebenenfalls angeschlossenen Ansaugleitung über den Einlassbereich in den Umwälzbereich und aus diesen hinaus zur Ansaugvorrichtung. In Schritt iii) wird die Förderphase, bestehend aus der Fördersequenz und vorzugsweise der optionalen Leersaugphase, durch vollständige Deaktivierung oder Verringerung der Ansaugung und Absaugung beendet und die Entleerungssequenz begonnen, in welcher das gereinigte Schüttgutmaterial durch eine Auslassöffnung ausgegeben wird. Das gereinigte Schüttgutmaterial kann beispielsweise direkt oder indirekt über einen weiteren Prozessschritt oder weitere Reinigung einer kunststoffverarbeitenden Maschine, wie einer Spritzgießmaschine oder Extrusionsanlage, zugeführt werden. Die Auslassöffnung kann verschließbar sein. Nach Beendigung der Entleerungssequenz kann der Reinigungszyklus von neuem beginnen, indem erneut gehäuftes Schüttgutmaterial von dem Reservoir in der Fördersequenz angesaugt wird. Bevorzugt werden die Schritte i-iii) in der angegebenen Reihenfolge ausgeführt. Die Leersaugsequenz kann beispielsweise zwischen 0 s und 180 s andauern. Die Fördersequenz kann beispielsweise zwischen 1 s und 120 s andauern. Die Entleerungssequenz kann beispielsweise zwischen 1 s und 30 s andauern.

Richtungs- und Ortsangaben in dieser Offenbarung beziehen sich auf den bestimmungsgemäßen Gebrauchszustand der Reinigungskammer. Bevorzugt ist dabei der Umwälzbereich zumindest teilweise oberhalb des Einlassbereichs angeordnet.

Bevorzugt ist, wenn die Absaugöffnung an einer Oberseite der Reinigungskammer vorgesehen ist und an die Absaugöffnung eine Absaugvorrichtung angeschlossen ist, die während der Förderphase das Schüttgutmaterial ansaugt und die Verunreinigungen absaugt. Die Absaugöffnung ist vorzugsweise an der Oberseite des Umwälzbereichs angeordnet, sodass in der Fördersequenz und der optionalen Leersaugsequenz in dem Umwälzbereich ein nach oben gerichteter Fluidstrom entsteht. Die Absaugvorrichtung kann zum Beispiel durch einen Verdichter gebildet sein. Abgesaugte Verunreinigungen können beispielsweise in einem Behälter oder einem Sack aufgefangen werden.

Bei einer Ausführungsform der Erfindung kann vorgesehen sein, dass die Auslassöffnung an einer Unterseite der Reinigungskammer angeordnet ist und das gereinigte Schüttgutmaterial in der Entleerungssequenz aufgrund der Schwerkraft nach unten durch die Auslassöffnung fällt, vorzugsweise wobei die Auslassöffnung in der Förderphase durch eine Klappe verschließbar ist. Die Auslassöffnung kann insbesondere an der Unterseite des Einlassbereichs angeordnet sein. In der Entleerungssequenz ist die Ansaugung deaktiviert oder soweit verringert, dass das gereinigte Schüttgutmaterial aufgrund der Schwerkraft nach unten durch die Auslassöffnung fällt. Die optionale Klappe kann zu diesem Zweck geöffnet werden. Bevorzugt ist, wenn die Klappe während der Förderphase geschlossen, insbesondere im Wesentlichen luftdicht geschlossen, ist.

Günstig ist, wenn das verunreinigte Schüttgutmaterial nach dem Ansaugen in der Fördersequenz in dem Einlassbereich durch die Innenwandung des Einlassbereichs gebremst wird, vorzugsweise wobei sich das Schüttgut im Wesentlichen nach Art eines sich nach unten oder oben verjüngenden Schraubgewindes bewegt. Der Kontakt des Schüttgutmaterials mit der Innenwandung des Einlassbereichs bremst das Schüttgutmaterial durch Reibung ab und schüttelt dieses durch, wodurch sich erste Verunreinigungen lösen können. Durch eine sich verjüngende Form des Einlassbereichs kann das Schüttgutmaterial nach Art eines sich nach unten oder oben verjüngenden Schraubgewindes bewegt werden, wodurch das Schüttgutmaterial zielgerichtet in den Umwälzbereich überführt werden kann.

Bei einer Ausführungsform der Erfindung weist der Umwälzbereich insbesondere an der Unterseite eine Einlassöffnung auf, die vorzugsweise unterhalb des Einlassstutzens angeordnet ist, sodass das Schüttgutmaterial in der Förderphase in dem Einlassbereich zunächst vorzugsweise nach unten zu der Einlassöffnung gesaugt und anschließend in den Umwälzbereich insbesondere nach oben gesaugt wird. Die Einlassöffnung kann auch seitlich am Umwälzbereich angeordnet sein. Wenn die Einlassöffnung jedoch an der Unterseite angeordnet ist, hat dies den Vorteil, dass gereinigtes Schüttgutmaterial in der Entleerungssequenz einfach nach unten fallen und dadurch leichter aus dem Umwälzbereich gelangen kann.

Besonders bevorzugt ist, wenn das verunreinigte Schüttgutmaterial in dem Umwälzbereich umgewälzt wird, indem das verunreinigte Schüttgutmaterial von oben angesaugt wird, von nachkommenden verunreinigtem Schüttgutmaterial radial nach außen verdrängt wird, nach unten fällt und anschließend wieder von oben angesaugt wird. Zu diesem Zweck kann die Ansaugvorrichtung an einer Oberseite des Umwälzbereichs angeschlossen sein.

Um eine große Menge an Schüttgutmaterial zu reinigen, ist es vorteilhaft, wenn die Förderphase und die Entleerungssequenz einen Reinigungszyklus bilden und mehrere Reinigungszyklen hintereinander ausgeführt werden. In jedem Reinigungszyklus kann neues, verunreinigtes Schüttgutmaterial von einem Reservoir angesaugt werden. Die Reinigungszyklen können alle die gleiche Dauer aufweisen.

Um verunreinigtes Schüttgutmaterial zu reinigen, kann zumindest eine weitere Abscheidevorrichtung vorgesehen sein, die parallel zu der Abscheidevorrichtung geschaltet ist, und ebenfalls verunreinigtes Schüttgutmaterial gemäß den Schritten i)-iii) wie oben beschrieben mit dem erfindungsgemäßen Verfahren reinigt. Die weitere Abscheidevorrichtung kann gleichartig, insbesondere ident, wie die Abscheidevorrichtung aufgebaut sein. Die weitere Abscheidevorrichtung kann das gleiche Verfahren durchführen wie die Abscheidevorrichtung.

Die Erfindung sieht auch ein Verfahren zum Herstellen eines Kunststofferzeugnisses mit den folgenden Schritten vor:
a) Reinigen von verunreinigtem Schüttgutmaterial mit einem Verfahren zum Reinigen von verunreinigtem Schüttgutmaterial wie oben beschrieben;
b) Zuführen des gereinigten Schüttgutmaterials zu einer kunststoffverarbeitenden Maschine, insbesondere einer Spritzgießmaschine oder Extrusionsanlage;
c) Erzeugen eines Kunststofferzeugnisses durch die kunststoffverarbeitende Maschine.

Nach dem Reinigen des verunreinigten Schüttgutmaterials kann eine Zwischenlagerung, ein weiterer Prozessschritt oder weitere Reinigung vorgesehen sein. Das Kunststofferzeugnis kann beispielsweise ein Teil für den Innenraum eines Automobils, ein Verpackungsbehälter, ein Spielzeug oder ein Fensterprofil sein.

Die erfindungsgemäße Aufgabe wird auch durch eine Abscheidevorrichtung der eingangs erwähnten Art gelöst, bei der vorgesehen ist, dass die Reinigungskammer einen vorzugsweise zumindest teilweise konisch geformten Umwälzbereich aufweist und der Einlassbereich und der Umwälzbereich derart angeordnet und ausgebildet sind, dass das verunreinigte Schüttgutmaterial im Betrieb der Abscheidevorrichtung durch Ansaugen während der Förderphase von dem Einlassbereich in den Umwälzbereich gefördert und in dem Umwälzbereich fortwährend bis zur Entleerungssequenz durch das Ansaugen umgewälzt und dadurch gereinigt wird, wobei Verunreinigungen, die sich von dem verunreinigten Schüttgutmaterial lösen, aus dem Umwälzbereich durch das Ansaugen des verunreinigten Schüttgutmaterials während der Förderphase über eine Absaugöffnung absaugbar sind. Die erfindungsgemäße Abscheidevorrichtung ist vorzugsweise dazu ausgebildet, das oben beschriebene Verfahren zur Reinigung von verunreinigtem Schüttgutmaterial auszuführen. Die Vorteile und Merkmale, die in Zusammenhang mit dem Verfahren zur Reinigung von verunreinigtem Schüttgutmaterial beschrieben wurden, sind daher auf die erfindungsgemäße Abscheidevorrichtung übertragbar.

Der Einlassbereich und der Umwälzbereich können insbesondere durch eine Wandung räumlich voneinander getrennt sein. Bevorzugt ist die Abscheidevorrichtung als Vakuumförder-Abscheidevorrichtung ausgebildet. Die Abscheidevorrichtung weist vorzugsweise eine Einrichtung zur Erzeugung eines Vakuums bzw. eines Unterdrucks auf oder ist beispielsweise mit einer solchen Einrichtung verbunden. Mithilfe des Vakuums bzw. des Unterdrucks kann das Schüttgutmaterial oder optional das Fluid durch die Abscheidevorrichtung gefördert werden.

Bei einer Ausführungsform der Erfindung ist vorgesehen, dass die Absaugöffnung an einer Oberseite der Reinigungskammer, insbesondere an einer Oberseite des Umwälzbereichs, angeordnet und als Anschluss für eine Absaugvorrichtung ausgebildet ist. Die Absaugvorrichtung kann mithilfe eines Schlauches oder eines Rohres mit der Absaugöffnung verbunden sein. Alternativ kann die Absaugvorrichtung direkt mit der Absaugöffnung verbunden sein.

Um das Absaugen des Schüttgutmaterials zu verhindern, kann in dem Umwälzbereich, vorzugsweise an einer Oberseite des Umwälzbereichs, ein Gitter vorgesehen sein. Das Gitter kann insbesondere waagrecht in dem Umwälzbereich angeordnet sein. Je nach Aufbau der Abscheidevorrichtung sind auch andere Anordnungen des Gitters, wie etwa eine schräge oder vertikale Anordnung, möglich. Das Gitter erstreckt sich bevorzugt im Wesentlichen über die gesamte Querschnittsfläche des Umwälzbereichs. Das Gitter kann ein Drahtsieb sein. Bevorzugt ist das Gitter auswechselbar ausgestaltet.

Das Gitter kann beispielsweise eine Öffnungsweite von 0,2 mm bis 5 mm, insbesondere 0,5 mm bis 3 mm, aufweisen.

Bei einer Ausführungsform der Erfindung kann vorgesehen sein, dass der Umwälzbereich vorzugsweise an der Unterseite eine Einlassöffnung aufweist, durch die das verunreinigte Schüttgutmaterial in den Umwälzbereich gelangt, wobei die Einlassöffnung insbesondere unterhalb des Einlassstutzens angeordnet ist. Durch die Anordnung der Einlassöffnung an der Unterseite kann gereinigtes Schüttgutmaterial vorteilhafterweise in der Entleerungssequenz aufgrund der Schwerkraft aus dem Umwälzbereich gefördert werden.

Bevorzugt ist, wenn an den Umwälzbereich ein Einlassrohr anschließt, an dessen der Unterseite der Reinigungskammer zugewandten Ende die Einlassöffnung angeordnet ist. Das Einlassrohr kann beispielsweise eine Länge von 40 mm bis 550 mm aufweisen. Das Einlassrohr kann beispielsweise einen Durchmesser von 30 mm bis 80 mm aufweisen. Das Einlassrohr hat bevorzugt einen runden Querschnitt.

Als besonders günstig hat sich erwiesen, wenn die Querschnittsfläche der Einlassöffnung zwischen 50 % und 130 %, vorzugsweise zwischen 60 % und 120 %, der Querschnittsfläche des Einlassstutzens beträgt. Alternativ kann vorgesehen sein, dass die Querschnittsfläche der Einlassöffnung im Wesentlichen der Querschnittsfläche des Einlassstutzens entspricht.

Damit Schüttgutmaterial leichter in den Umwälzbereich gelangen kann, kann vorgesehen sein, dass im Querschnitt der Reinigungskammer und entlang einer Längsachse der Reinigungskammer betrachtet der Einlassbereich und der Umwälzbereich sich zumindest teilweise überlappen. Mit anderen Worten existiert entlang der Längsachse der Reinigungskammer ein Abschnitt, in dem sowohl der Einlassbereich, als auch der Umwälzbereich angeordnet sind.

Zur Führung des Material- und Fluidstromes ist es vorteilhaft, wenn im Querschnitt der Reinigungskammer betrachtet der Einlassbereich und der Umwälzbereich jeweils einen konisch zusammenlaufenden Abschnitt aufweisen und in dem Einlassbereich ein Kanal für das verunreinigte Schüttgutmaterial zwischen den konisch zusammenlaufenden Abschnitten des Einlassbereichs und des Umwälzbereichs gebildet wird. Durch den konisch zusammenlaufenden Abschnitt des Umwälzbereichs wird die Umwälzung des Schüttgutmaterials begünstigt.

Bei einer Ausführungsform der Erfindung ist vorgesehen, dass der Einlassstutzen im Querschnitt der Reinigungskammer betrachtet auf der Höhe des konisch zusammenlaufenden Abschnitts des Umwälzbereichs angeordnet ist. Dadurch wird der Strom des verunreinigten Schüttgutmaterials vorteilhafterweise in den Einlassbereich geführt.

Die Erfindung sieht auch eine Anlage zum Herstellen eines Kunststofferzeugnisses vor, die folgendes aufweist:
eine Ansaugvorrichtung;
eine Abscheidevorrichtung wie oben beschrieben, die mit der Ansaugvorrichtung verbunden ist;
eine kunststoffverarbeitende Maschine, insbesondere eine Spritzgießmaschine oder Extrusionsanlage, die mit der Abscheidevorrichtung verbunden ist.

Der Transport des verunreinigten Schüttgutmaterials zu der Abscheidevorrichtung und von der Abscheidevorrichtung zu der kunststoffverarbeitenden Maschine kann insbesondere über Schläuche oder Rohre erfolgen. Die kunststoffverarbeitende Maschine kann beispielsweise Teile für den Innenraum eines Automobils, Verpackungsbehälter, Spielzeuge oder Fensterprofile erzeugen.

Nachfolgend wird die Erfindung anhand eines konkreten Ausführungsbeispiels beschrieben, auf das sie jedoch nicht beschränkt sein soll.

Es zeigen:
Fig. 1 eine Abscheidevorrichtung im Querschnitt;
Fig. 2 die Abscheidevorrichtung in einer Förderphase im Querschnitt; und
Fig. 3 die Abscheidevorrichtung in einer Entleerungssequenz im Querschnitt.

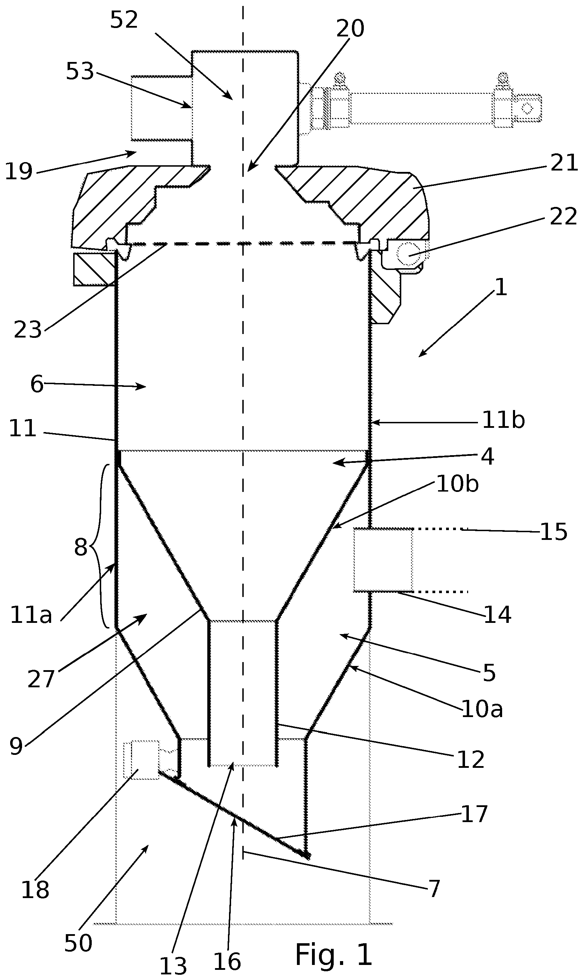

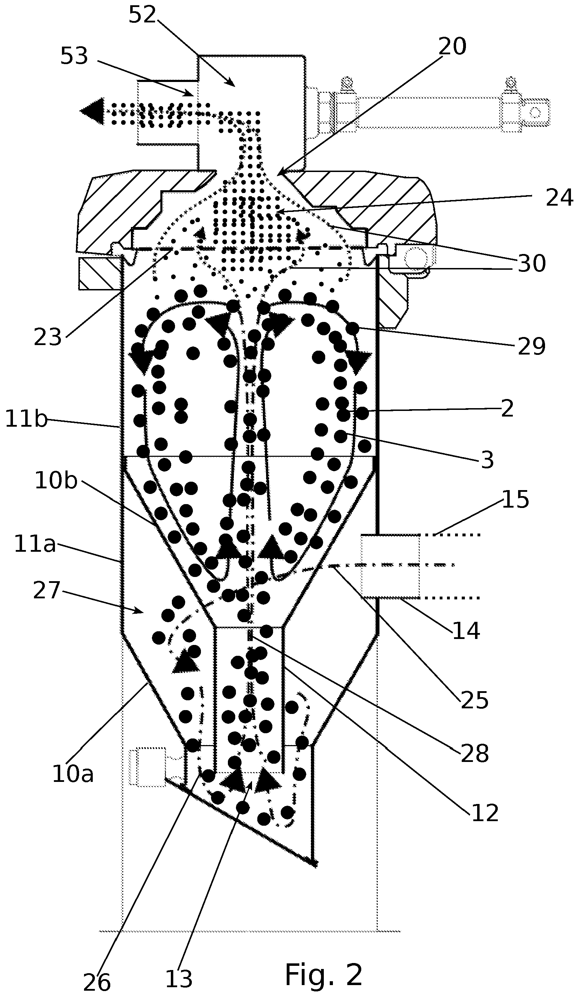

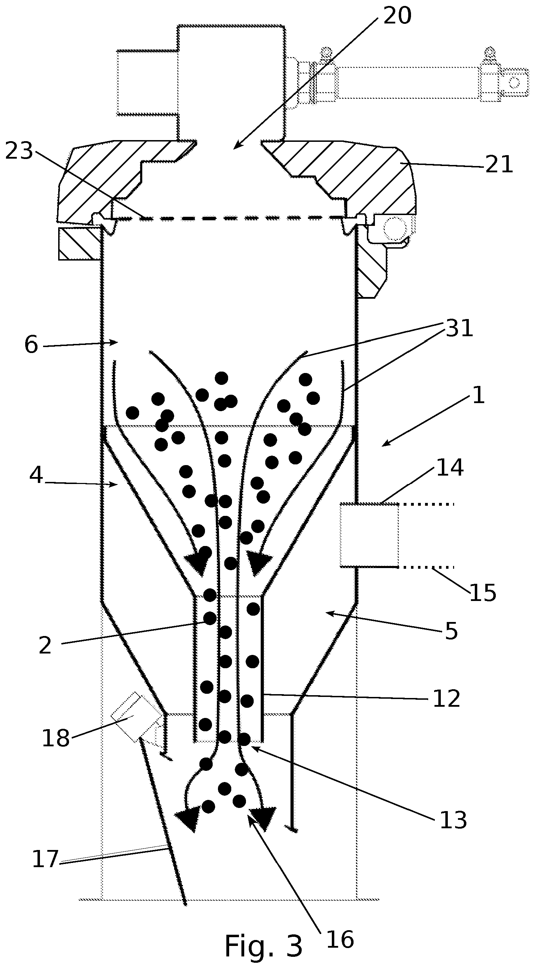

Fig. 1 zeigt eine Abscheidevorrichtung 1 zum Reinigen von verunreinigtem Schüttgutmaterial 2 (siehe Fig. 2 und Fig. 3). Das Schüttgutmaterial 2 kann beispielsweise ein recyceltes Kunststoffmaterial, Rezyklat 3 genannt, sein. Insbesondere ist das Schüttgutmaterial ein Kunststoffgranulat. Die Abscheidevorrichtung 1 weist eine Reinigungskammer 4 auf, die in einen Einlassbereich 5 und einen Umwälzbereich 6 unterteilt ist. In der gezeigten Darstellung ist der Umwälzbereich 6 zumindest teilweise oberhalb des Einlassbereichs 5 angeordnet. Entlang der Symmetrieachse 7 betrachtet existiert jedoch ein Überlappungsbereich 8, in dem auf derselben Höhe entlang der Längsachse 7 gesehen sowohl der Einlassbereich 5, als auch der Umwälzbereich 6 angeordnet sind. Die Symmetrieachse 7 bildet in der gezeigten Darstellung auch die Längsachse der Reinigungskammer **4.** Der Einlassbereich 5 und der Umwälzbereich 6 sind räumlich durch eine Wandung 9 bis auf eine noch näher zu beschreibende Einlassöffnung 13 voneinander getrennt. Die Wandung 9 kann herausnehmbar gestaltet sein. Sowohl der Einlassbereich 5, als auch der Umwälzbereich 6 weisen jeweils an der Unterseite einen konisch zusammenlaufenden Abschnitt 10a, 10b auf. Der konisch zusammenlaufende Abschnitt 10b kann die Wandung 9 bilden. Oberhalb der konisch zusammenlaufenden Abschnitte 10a, 10b weisen der Einlassbereich 5 und der Umwälzbereich 6 jeweils vorzugsweise gerade Wandabschnitte 11a, 11b auf. Die Wandabschnitte 11a, 11b werden durch die Außenwand 11 der Reinigungskammer gebildet. Der konisch zusammenlaufende Abschnitt 10b des Umwälzbereichs 6 mündet in ein Einlassrohr 12, an dessen Unterseite eine Einlassöffnung 13 vorgesehen ist. Durch die Einlassöffnung 13 und das Einlassrohr 12 kann Schüttgutmaterial 2 von dem Einlassbereich 5 in den Umwälzbereich 6 und vice versa gelangen.

Die Reinigungskammer 4 weist des Weiteren einen Einlassstutzen 14 auf, der in der gezeigten Darstellung im Wesentlichen senkrecht zu der Längsachse 7 angeordnet ist und in den Einlassbereich 5 mündet. Der Einlassstutzen 14 kann über eine Ansaugleitung 15, angedeutet durch die punktierten Linien, mit einem Reservoir (nicht gezeigt) von verunreinigtem Schüttgutmaterial 2 verbunden sein.

An der Unterseite 50 der Reinigungskammer 4, also auch an der Unterseite des Einlassbereichs 5, ist eine Auslassöffnung 16 vorgesehen, die mit einer Klappe 17 verschließbar ist. Die Klappe 17 kann mithilfe eines Antriebs 18, beispielswiese eines Hydraulik- oder Pneumatik-Aktuators oder eines Elektromotors, geöffnet und geschlossen werden. In einer alternativen Ausgestaltungsform wird die Klappe 17 durch Schwerkraft betätigt. In der gezeigten Darstellung ist die Querschnittsfläche der Auslassöffnung 16 zur Längsachse 7 der Reinigungskammer 4 geneigt.

An der Oberseite 19 der Reinigungskammer 4 ist in der gezeigten Darstellung eine Absaugöffnung 20 angeordnet, über welche die Reinigungskammer 4 mit einer Absaugvorrichtung (nicht gezeigt) verbunden sein kann. Die Absaugöffnung 20 mündet in einer Umlenkkammer 52. Die Absaugöffnung 20 ist in der gezeigten Darstellung mittig angeordnet, d.h. im Wesentlichen zentral um die Symmetrieachse 7. Die Absaugöffnung 20 oder, wie im gezeigten Beispiel, eine Öffnung 53 der Umlenkkammer 52 kann auch als Anschluss für die Absaugvorrichtung bzw. für einen Schlauch oder ein Rohr zu der Absaugvorrichtung ausgebildet sein.

In der gezeigten Darstellung weist die Reinigungskammer 4 einen verriegelbaren Deckel 21 auf, in welchem die Absaugöffnung 20 ausgebildet ist. Der Deckel 21 kann über ein Scharnier 22 weggeklappt werden und so die Reinigungskammer 4 geöffnet werden. Bevorzugt ist, wenn der Deckel werkzeuglos geöffnet werden kann.

In dem Umwälzbereich 6 ist ein Gitter 23 vorgesehen, welches in der gezeigten Darstellung waagrecht, d.h. senkrecht zur Längsachse 7, orientiert ist. Selbstverständlich kann das Gitter 23 auch schräg zur Längsachse 7 orientiert sein. Das Gitter 23 ist dazu eingerichtet, Schüttgutmaterial 2 in dem Umwälzbereich 6 zurückzuhalten, Staub- und Feinteilpartikel jedoch passieren zu lassen. Das Gitter 23 kann vorzugsweise werkzeuglos auswechselbar sein. In einem Beispiel besitzt das Gitter 23 eine Öffnungsweite von 2 mm.

Fig. 2 und Fig. 3 zeigen die Abscheidevorrichtung 1 während des Betriebs. Der Strömungsverlauf des Schüttgutmaterials 2 und der Verunreinigung 24 ist durch Pfeile 25, 26, 28, 29, 30, 31 angedeutet.

In einer Förder- und Leersaugsequenz, die zusammen eine Förderphase bilden, wird eine bestimmte Menge typischerweise im Bereich von 1 kg bis 50 kg verunreinigtes Schüttgutmaterial durch die Absaugöffnung 20 über den Einlassstutzen 14 angesaugt. Die Leersaugsequenz ist eine optionale Sequenz, die nicht zwingend vorgesehen sein muss, aber im gezeigten Ausführungsbeispiel verwirklicht ist. Wenn keine Leersaugsequenz vorgesehen ist, wird die Förderphase nur durch die Fördersequenz gebildet.

Insbesondere bei kurzen Längen der Ansaugleitung 15 kann auf eine Leersaugsequenz verzichtet werden. Durch den Ansaugunterdruck bzw. den dadurch entstehenden Volumenstrom wird das verunreinigte Schüttgutmaterial 2 zunächst in den Einlassbereich 5 gesaugt (Pfeillinie 25). In dem Einlassbereich 5 wird das verunreinigte Schüttgutmaterial 2 durch Kontakt mit den Abschnitten 10a, 10b und 11a abgebremst und nach unten in Richtung der Einlassöffnung 13 gesaugt (Pfeillinie 26). Je nach Stärke des Volumenstroms strömt das verunreinigte Schüttgutmaterial 2 dabei ein- oder mehrmals um das Einlassrohr 12 und bewegt sich dabei abwärts. Begünstigt wird diese Bewegung, die als Bewegung nach Art eines sich verjüngenden Schraubgewindes beschrieben werden kann, durch einen Kanal 27, der zwischen den sich verjüngenden Abschnitten 10a, 10b in dem Einlassbereich 5 gebildet wird. Schließlich gelangt das verunreinigte Schüttgutmaterial 2 über das Einlassrohr 12 in den Umwälzbereich 6 und wird nach oben hin angesaugt (Pfeillinie 28).

In der Fördersequenz wird nur eine bestimmte Menge an Schüttgutmaterial 2 angesaugt. Nachdem alles oder zumindest der überwiegende Großteil des Schüttgutmaterials 2 innerhalb der Reinigungskammer 4 eingelangt ist, wird in einer an die Fördersequenz anschließenden Leersaugsequenz ein Fluid, vorzugsweise Luft, durch den Einlassstutzen 14 angesaugt. Dies hat zweierlei Wirkung: Zum einen werden Rückstände von Schüttgutmaterial 2 in der Ansaugleitung 15 und in dem Einlassstutzen 14 in die Reinigungskammer 4 gesaugt. Zum anderen wird durch das nachströmende Fluid das verunreinigte Schüttgutmaterial 2 in den Umwälzbereich 6 gedrängt und dort umgewälzt. Die Umwälzung erfolgt auch bereits in der Fördersequenz.

Nachdem das verunreinigte Schüttgutmaterial 2 durch das Einlassrohr 12 hochgesaugt wurde, wird es mittig in Richtung der Absaugöffnung 20 gezogen. Von dort wird es durch nachkommendes Schüttgutmaterial 2 radial nach Außen verdrängt (Pfeillinie 29), fällt seitlich nach unten und wird von dort, begünstigt durch den konisch zusammenlaufenden Abschnitt 10b des Umwälzbereichs 6, wieder mittig nach oben in Richtung der Ansaugöffnung 20 gesaugt. Das Schüttgutmaterial 2 wird somit umgeschüttet. Das Gitter 23 verhindert dabei die Absaugung von Schüttgutmaterial 2, erlaubt aber den Durchtritt von Verunreinigungen. Dieser Vorgang wird als Umwälzung bezeichnet. Durch die Umwälzung werden Verunreinigungen 24, wie Staub- und Feinteilpartikel 24, vom verunreinigten Schüttgutmaterial 2 gelöst und durch das Gitter 23 abgesaugt (Pfeillinien 30). Durch die Umwälzung und Absaugung wird das Schüttgutmaterial 2 gereinigt.

Nach einer bestimmten Zeitdauer wird die Leersaugsequenz und damit die Förderphase beendet, indem die Ansaugung über die Absaugöffnung 20 beendet oder reduziert wird. Die an die Förderphase anschließende Sequenz wird als Entleerungssequenz bezeichnet. In der Entleerungssequenz fällt das Schüttgutmaterial 2 aufgrund der Schwerkraft nach unten durch das Einlassrohr 12 zurück (Pfeillinien 31) in den Einlassbereich **5,** wie in Fig. 3 gezeigt. Durch Öffnen der Klappe 17 gelangt das gereinigte Schüttgutmaterial 2 von dem Einlassbereich 5 durch die Auslassöffnung 16 nach außen. Eine zusätzliche Absaugung kann das Fördern des gereinigten Schüttgutmaterials 2 durch die Auslassöffnung 16 begünstigen. Nach Passieren der Auslassöffnung 16 kann das gereinigte Schüttgutmaterial 2 in eine weitere Abscheidevorrichtung (nicht gezeigt) oder direkt bzw. indirekt, beispielsweise über eine Zwischenlagerung, zu einer kunststoffverarbeitenden Maschine (ebenfalls nicht gezeigt) weiterbefördert werden. Die Weiterbeförderung kann durch Rohre oder Schläuche erfolgen, in denen das gereinigte Schüttgutmaterial vorzugsweise angesaugt wird.

Es können auch mehrere Abscheidevorrichtungen 1 parallel angeordnet sein und betrieben werden, um verunreinigtes Schüttgutmaterial 2 mit dem erfindungsgemäßen Verfahren zu reinigen.

## Patentansprüche

1. Verfahren zum Reinigen von verunreinigtem Schüttgutmaterial (2), vorzugsweise Kunststoffschüttgutmaterial, insbesondere Rezyklat (3), in einer Abscheidevorrichtung (1) mit einer Reinigungskammer (4) mit den folgenden Schritten:
i) Ansaugen des verunreinigten Schüttgutmaterials (2) über einen Einlassstutzen (14) der Abscheidevorrichtung (1) und dadurch Fördern des verunreinigten Schüttgutmaterials (2) in einen vorzugsweise zumindest teilweise konisch geformten Einlassbereich (5) der Reinigungskammer (4) während einer Fördersequenz;
ii) optionales Ansaugen eines Fluids, insbesondere Luft, durch den Einlassstutzen (14) während einer an die Fördersequenz anschließenden Leersaugsequenz, insbesondere um den Einlassstutzen (14) und eine Ansaugleitung (15) von möglichen Rückständen des verunreinigten Schüttgutmaterials zu leeren, wobei die Fördersequenz und vorzugsweise die optionale Leersaugsequenz eine Förderphase bilden; und
iii) Ausgeben des gereinigten Schüttgutmaterials (2) durch eine Auslassöffnung (16) während einer Entleerungssequenz nach Beendigung der Förderphase,
**dadurch gekennzeichnet, dass**
das verunreinigte Schüttgutmaterial (2) durch Ansaugen während der Förderphase von dem Einlassbereich (5) in einen vorzugsweise zumindest teilweise konisch geformten Umwälzbereich (6) der Reinigungskammer (4) gefördert und in dem Umwälzbereich (6) fortwährend bis zur Entleerungssequenz durch das Ansaugen umgewälzt und dadurch gereinigt wird, wobei Verunreinigungen (24), die sich von dem verunreinigten Schüttgutmaterial (2) lösen, aus dem Umwälzbereich (6) durch das Ansaugen des verunreinigten Schüttgutmaterials (2) während der Förderphase über eine Absaugöffnung (20) abgesaugt werden.

2. Verfahren nach Anspruch 1, **dadurch gekennzeichnet, dass** die Absaugöffnung (20) an einer Oberseite (19) der Reinigungskammer (4) vorgesehen ist und an die Absaugöffnung (20) eine Absaugvorrichtung angeschlossen ist, die während der Förderphase das Schüttgutmaterial (2) ansaugt und die Verunreinigungen (24) absaugt.

3. Verfahren nach Anspruch 1 oder 2, **dadurch gekennzeichnet, dass** die Auslassöffnung (16) an einer Unterseite (50) der Reinigungskammer (4) angeordnet ist und das gereinigte Schüttgutmaterial (2) in der Entleerungssequenz aufgrund der Schwerkraft nach unten durch die Auslassöffnung (16) fällt, vorzugsweise wobei die Auslassöffnung (16) in der Förderphase durch eine Klappe (17) verschließbar ist.

4. Verfahren nach einem der Ansprüche 1 bis 3, **dadurch gekennzeichnet, dass** das verunreinigte Schüttgutmaterial (2) nach dem Ansaugen in der Fördersequenz in dem Einlassbereich (5) durch die Innenwandung des Einlassbereichs (5) gebremst wird, vorzugsweise wobei sich das Schüttgutmaterial (2) im Wesentlichen nach Art eines sich nach unten oder oben verjüngenden Schraubgewindes bewegt.

5. Verfahren nach einem der Ansprüche 1 bis 4, **dadurch gekennzeichnet, dass** der Umwälzbereich (6) insbesondere an der Unterseite eine Einlassöffnung (13) aufweist, die vorzugsweise unterhalb des Einlassstutzens (14) angeordnet ist, sodass das Schüttgutmaterial (2) in der Förderphase in dem Einlassbereich zunächst vorzugsweise nach unten zu der Einlassöffnung (13) gesaugt und anschließend in den Umwälzbereich (6) insbesondere nach oben gesaugt wird.

6. Verfahren nach einem der Ansprüche 1 bis 5, **dadurch gekennzeichnet, dass** das verunreinigte Schüttgutmaterial (2) in dem Umwälzbereich (6) umgewälzt wird, indem das verunreinigte Schüttgutmaterial (2) von oben angesaugt wird, von nachkommenden verunreinigtem Schüttgutmaterial (2) radial nach außen verdrängt wird, nach unten fällt und anschließend wieder von oben angesaugt wird.

7. Verfahren nach einem der Ansprüche 1 bis 6, **dadurch gekennzeichnet, dass** die Förderphase und die Entleerungssequenz einen Reinigungszyklus bilden und mehrere Reinigungszyklen hintereinander ausgeführt werden.

8. Verfahren zum Herstellen eines Kunststofferzeugnisses mit den folgenden Schritten:
a) Reinigen von verunreinigtem Schüttgutmaterial mit einem Verfahren zum Reinigen von verunreinigtem Schüttgutmaterial gemäß den Ansprüchen 1 bis 7;
b) Zuführen des gereinigten Schüttgutmaterials zu einer kunststoffverarbeitenden Maschine, insbesondere einer Spritzgießmaschine oder Extrusionsanlage;
c) Erzeugen eines Kunststofferzeugnisses durch die kunststoffverarbeitende Maschine.

9. Abscheidevorrichtung (1) zum Reinigen von verunreinigtem Schüttgutmaterial (2), vorzugsweise Kunststoffschüttgutmaterial, insbesondere Rezyklat (3), aufweisend:
eine Reinigungskammer (4) mit einem vorzugsweise zumindest teilweise konisch geformten Einlassbereich (5);
einen Einlassstutzen (14), der in den Einlassbereich (5) führt; und
eine vorzugsweise durch eine Klappe (17) verschließbare Auslassöffnung (16),
wobei die Abscheidevorrichtung (1) dazu eingerichtet ist, in einer Fördersequenz, in der das verunreinigte Schüttgutmaterial (2) durch den Einlassstutzen (14) in den Einlassbereich (5) durch Ansaugen gefördert wird, in einer optionalen Leersaugsequenz, in der ein Fluid, insbesondere Luft, durch den Einlassstutzen (14) angesaugt wird, und in einer Entleerungssequenz, in der gereinigtes Schüttgutmaterial (2) durch die Auslassöffnung (16) ausgegeben wird, betrieben zu werden, wobei die Fördersequenz und vorzugsweise die optionale Leersaugsequenz eine Förderphase bilden,
**dadurch gekennzeichnet, dass**
die Reinigungskammer (4) einen vorzugsweise zumindest teilweise konisch geformten Umwälzbereich (6) aufweist und der Einlassbereich (5) und der Umwälzbereich (6) derart angeordnet und ausgebildet sind, dass das verunreinigte Schüttgutmaterial (2) im Betrieb der Abscheidevorrichtung (1) durch Ansaugen während der Förderphase von dem Einlassbereich in den Umwälzbereich (6) gefördert und in dem Umwälzbereich (6) fortwährend bis zur Entleerungssequenz durch das Ansaugen umgewälzt und dadurch gereinigt wird, wobei Verunreinigungen (24), die sich von dem verunreinigten Schüttgutmaterial (2) lösen, aus dem Umwälzbereich (6) durch das Ansaugen des verunreinigten Schüttgutmaterials (2) während der Förderphase über eine Absaugöffnung (20) absaugbar sind.

10. Abscheidevorrichtung (1) nach Anspruch 9, **dadurch gekennzeichnet, dass** die Absaugöffnung (20) an einer Oberseite (19) der Reinigungskammer (4), insbesondere an einer Oberseite des Umwälzbereichs (6), angeordnet und als Anschluss für eine Absaugvorrichtung ausgebildet ist.

11. Abscheidevorrichtung (1) nach einem der Ansprüche 9 bis 10, **dadurch gekennzeichnet, dass** der Umwälzbereich vorzugsweise an der Unterseite eine Einlassöffnung aufweist, durch die das verunreinigte Schüttgutmaterial in den Umwälzbereich gelangt, wobei die Einlassöffnung insbesondere unterhalb des Einlassstutzens angeordnet ist.

12. Abscheidevorrichtung (1) nach Anspruch 11, **dadurch gekennzeichnet, dass** an den Umwälzbereich (6) ein Einlassrohr (12) anschließt, an dessen der Unterseite (50) der Reinigungskammer (4) zugewandten Ende die Einlassöffnung (13) angeordnet ist.

13. Abscheidevorrichtung (1) nach einem der Ansprüche 9 bis 12, **dadurch gekennzeichnet, dass** im Querschnitt der Reinigungskammer (4) und entlang einer Symmetrieachse (7), insbesondere Längsachse, der Reinigungskammer (4) betrachtet der Einlassbereich (5) und der Umwälzbereich (6) sich zumindest teilweise überlappen.

14. Abscheidevorrichtung (1) nach einem der Ansprüche 9 bis 13, **dadurch gekennzeichnet, dass** im Querschnitt der Reinigungskammer (4) betrachtet der Einlassbereich (5) und der Umwälzbereich (6) jeweils einen konisch zusammenlaufenden Abschnitt (10a, 10b) aufweisen und in dem Einlassbereich (5) ein Kanal (27) für das verunreinigte Schüttgutmaterial (27) zwischen den konisch zusammenlaufenden Abschnitten (10a, 10b) des Einlassbereichs (5) und des Umwälzbereichs (6) gebildet wird, vorzugsweise wobei der Einlassstutzen (14) im Querschnitt der Reinigungskammer (14) betrachtet auf der Höhe des konisch zusammenlaufenden Abschnitts (10b) des Umwälzbereichs (6) angeordnet ist.

15. Anlage zum Herstellen eines Kunststofferzeugnisses, aufweisend:
eine Ansaugvorrichtung;
eine Abscheidevorrichtung (1) nach einem der Ansprüche 9 bis 14, die mit der Ansaugvorrichtung verbunden ist;
eine kunststoffverarbeitende Maschine, insbesondere eine Spritzgießmaschine, die mit der Abscheidevorrichtung (1) verbunden ist.

## Claims

1. A method for cleaning contaminated bulk material (2), preferably plastic bulk material, in particular recyclate (3), in a separating device (1) with a cleaning chamber (4), comprising the following steps:
i) suctioning the contaminated bulk material (2) via an inlet nozzle (14) of the separating device (1) and thereby conveying the contaminated bulk material (2) into a preferably at least partially conically shaped inlet region (5) of the cleaning chamber (4) during a conveying sequence;
ii) optionally suctioning a fluid, in particular air, through the inlet nozzle (14) during an empty suction sequence following the conveying sequence, in particular to empty the inlet nozzle (14) and a suction line (15) of possible residues of the contaminated bulk material, wherein the conveying sequence and preferably the optional empty suction sequence form a conveying phase; and
iii) discharging the cleaned bulk material (2) through an outlet opening (16) during an emptying sequence after completion of the conveying phase,
**characterized in that**
the contaminated bulk material (2) is conveyed from the inlet region (5) into a preferably at least partially conically shaped circulating region (6) of the cleaning chamber (4) via suctioning during the conveying phase and is continuously circulated in the circulating region (6) up to the emptying sequence via suctioning and is thereby cleaned, wherein contaminants (24) which detach from the contaminated bulk material (2) are suctioned off from the circulating region (6) via suctioning of the contaminated bulk material (2) via an suctioning-off opening (20) during the conveying phase.

2. The method according to claim 1, **characterized in that** the suctioning-off opening (20) is provided on an upper side (19) of the cleaning chamber (4) and a suctioning-off device is connected to the suctioning-off opening (20), the suctioning-off device suctioning the bulk material (2) during the conveying phase and suctioning off the contaminants (24).

3. The method according to claim 1 or 2, **characterized in that** the outlet opening (16) is arranged on an underside (50) of the cleaning chamber (4) and the cleaned bulk material (2) falls downward through the outlet opening (16) due to gravity in the emptying sequence, preferably wherein the outlet opening (16) can be closed by a flap (17) in the conveying phase.

4. The method according to any one of claims 1 to 3, **characterized in that** the contaminated bulk material (2) is braked in the inlet region (5) by the inner wall of the inlet region (5) after suctioning in the conveying sequence, preferably wherein the bulk material (2) moves substantially in the manner of a downwardly or upwardly tapering screw thread.

5. The method according to any one of claims 1 to 4, **characterized in that** the circulating region (6) comprises, in particular on the underside, an inlet opening (13), which is preferably arranged below the inlet nozzle (14), so that the bulk material (2) is initially preferably sucked downwards to the inlet opening (13) in the conveying phase in the inlet region and is then sucked in particular upwards into the circulating region (6).

6. The method according to any one of claims 1 to 5, **characterized in that** the contaminated bulk material (2) is circulated in the circulating region (6) by the contaminated bulk material (2) being suctioned from above, being displaced radially outwards by subsequent contaminated bulk material (2), falling downwards and then being suctioned again from above.

7. The method according to any one of claims 1 to 6, **characterized in that** the conveying phase and the emptying sequence form a cleaning cycle and a plurality of cleaning cycles are carried out in succession.

8. A method for producing a plastic product, comprising the following steps:
a) cleaning contaminated bulk material with a method for cleaning contaminated bulk material according to claims 1 to 7;
b) feeding the cleaned bulk material to a plastic processing machine, in particular an injection moulding machine or extrusion system;
c) producing a plastic product with the plastic processing machine.

9. A separating device (1) for cleaning contaminated bulk material (2), preferably plastic bulk material, in particular recyclate (3), comprising:
a cleaning chamber (4) having a preferably at least partially conically shaped inlet region (5);
an inlet nozzle (14) leading into the inlet region (5); and
an outlet opening (16) preferably closable by a flap (17),
wherein the separating device (1) is configured to be operated in a conveying sequence in which the contaminated bulk material (2) is conveyed through the inlet nozzle (14) into the inlet region (5) via suctioning, in an optional empty suction sequence in which a fluid, in particular air, is suctioned through the inlet nozzle (14), and in an emptying sequence in which cleaned bulk material (2) is discharged through the outlet opening (16), wherein the conveying sequence and preferably the optional empty suction sequence form a conveying phase, **characterized in that**
the cleaning chamber (4) comprises a preferably at least partially conically shaped circulating region (6) and the inlet region (5) and the circulating region (6) are arranged and configured in such a way that the contaminated bulk material (2) is conveyed from the inlet region into the circulating region (6) via suctioning during the conveying phase during operation of the separating device (1) and is continuously circulated in the circulating region (6) up to the emptying sequence via suctioning and is thereby cleaned, wherein contaminants (24) which detach from the contaminated bulk material (2) can be suctioned off from the circulating region (6) via suctioning the contaminated bulk material (2) via a suctioning-off opening (20) during the conveying phase.

10. The separating device (1) according to claim 9, **characterized in that** the suctioning-off opening (20) is arranged on an upper side (19) of the cleaning chamber (4), in particular on an upper side of the circulating region (6), and is designed as a connection for a suctioning-off device.

11. The separating device (1) according to any one of claims 9 to 10, **characterized in that** the circulating region preferably comprises an inlet opening on the underside, through which the contaminated bulk material passes into the circulating region, the inlet opening being arranged in particular below the inlet nozzle.

12. The separating device (1) according to claim 11, **characterized in that** the circulating region (6) is adjoined by an inlet tube (12), which comprises an inlet opening (13) arranged at the end of the inlet tube (12), facing the underside (50) of the cleaning chamber (4).

13. The separating device (1) according to any one of claims 9 to 12, **characterized in that**, viewed in the cross-section of the cleaning chamber (4) and along an axis of symmetry (7), in particular longitudinal axis, of the cleaning chamber (4), the inlet region (5) and the circulating region (6) at least partially overlap.

14. The separating device (1) according to any one of claims 9 to 13, **characterized in that**, viewed in the cross-section of the cleaning chamber (4), the inlet region (5) and the circulating region (6) each comprise a conically converging section (10a, 10b), and a channel (27) for the contaminated bulk material (27) is formed in the inlet region (5) between the conically converging sections (10a, 10b) of the inlet region (5) and the circulating region (6), preferably wherein , as viewed in the cross-section of the cleaning chamber (14), the inlet nozzle (14) is arranged at the level of the conically converging section (10b) of the circulating region (6).

15. A system for producing a plastic product, comprising:
a suction device;
a separating device (1) according to any one of claims 9 to 14, connected to the suction device;
a plastic processing machine, in particular an injection moulding machine, which is connected to the separating device (1).

## Revendications

1. Procédé de nettoyage de matériaux en vrac contaminés (2), de préférence des matériaux en vrac plastiques, en particulier du recyclat (3), dans un dispositif de séparation (1) comprenant une chambre de nettoyage (4), comportant les étapes suivantes :
i) aspiration du matériau en vrac contaminé (2) via une tubulure d'entrée (14) du dispositif de séparation (1) et, de ce fait, transport du matériau en vrac contaminé (2) dans une zone d'entrée (5) de la chambre de nettoyage (4), de préférence au moins partiellement de forme conique, pendant une séquence de transport ;
ii) aspiration optionnelle d'un fluide, en particulier de l'air, à travers la tubulure d'entrée (14) pendant une séquence d'aspiration à vide consécutive à la séquence de transport, en particulier pour vider la tubulure d'entrée (14) et une conduite d'aspiration (15) des résidus éventuels du matériau en vrac contaminé, la séquence de transport et, de préférence, la séquence d'aspiration à vide optionnelle formant une phase de transport ; et
iii) évacuation du matériau en vrac nettoyé (2) par une ouverture de sortie (16) pendant une séquence de vidange après la fin de la phase de transport,
**caractérisé en ce que**
le matériau en vrac contaminé (2) est transporté par aspiration pendant la phase de transport de la zone d'entrée (5) vers une zone de recirculation (6) de la chambre de nettoyage (4), de préférence au moins partiellement de forme conique, et est continuellement brassé dans la zone de recirculation (6) jusqu'à la séquence de vidange par l'aspiration et ainsi nettoyé, les contaminants (24) qui se détachent du matériau en vrac contaminé (2) étant aspirés de la zone de recirculation (6) par l'aspiration du matériau en vrac contaminé (2) pendant la phase de transport via une ouverture d'aspiration (20).

2. Procédé selon la revendication 1, **caractérisé en ce que** l'ouverture d'aspiration (20) est située sur une face supérieure (19) de la chambre de nettoyage (4) et qu'un dispositif d'aspiration est raccordé à l'ouverture d'aspiration (20), lequel aspire le matériau en vrac (2) pendant la phase de transport et aspire les contaminants (24).

3. Procédé selon la revendication 1 ou 2, **caractérisé en ce que** l'ouverture de sortie (16) est disposée sur une face inférieure (50) de la chambre de nettoyage (4) et que le matériau en vrac nettoyé (2) tombe vers le bas à travers l'ouverture de sortie (16) sous l'effet de la gravité pendant la séquence de vidange, de préférence l'ouverture de sortie (16) pouvant être fermée par un clapet (17) pendant la phase de transport.

4. Procédé selon l'une des revendications 1 à 3, **caractérisé en ce que** le matériau en vrac contaminé (2), après aspiration dans la séquence de transport, est freiné dans la zone d'entrée (5) par la paroi intérieure de la zone d'entrée (5), de préférence le matériau en vrac (2) se déplaçant essentiellement à la manière d'un filetage hélicoïdal se rétrécissant vers le bas ou vers le haut.

5. Procédé selon l'une des revendications 1 à 4, **caractérisé en ce que** la zone de recirculation (6) comporte, en particulier sur la face inférieure, une ouverture d'entrée (13) qui est de préférence disposée en dessous de la tubulure d'entrée (14), de sorte que le matériau en vrac (2) est d'abord aspiré vers le bas en direction de l'ouverture d'entrée (13) dans la zone d'entrée pendant la phase de transport, puis aspiré vers le haut, en particulier, dans la zone de recirculation (6).

6. Procédé selon l'une des revendications 1 à 5, **caractérisé en ce que** le matériau en vrac contaminé (2) est brassé dans la zone de recirculation (6) en aspirant le matériau en vrac contaminé (2) par le haut, en le déplaçant radialement vers l'extérieur par le matériau en vrac contaminé (2) suivant, en le laissant tomber vers le bas, puis en l'aspirant à nouveau par le haut.

7. Procédé selon l'une des revendications 1 à 6, **caractérisé en ce que** la phase de transport et la séquence de vidange forment un cycle de nettoyage et plusieurs cycles de nettoyage sont exécutés consécutivement.

8. Procédé de fabrication d'un produit en plastique comprenant les étapes suivantes :
a) nettoyage de matériau en vrac contaminé par un procédé de nettoyage de matériau en vrac contaminé selon les revendications 1 à 7 ;
b) alimentation du matériau en vrac nettoyé à une machine de transformation de plastique, en particulier une machine d'injection ou une installation d'extrusion ;
c) production d'un produit en plastique par la machine de transformation de plastique.

9. Dispositif de séparation (1) pour nettoyer un matériau en vrac contaminé (2), de préférence un matériau en vrac plastique, en particulier du recyclat (3), comprenant :
une chambre de nettoyage (4) avec une zone d'entrée (5) de préférence au moins partiellement de forme conique ;
une tubulure d'entrée (14) menant à la zone d'entrée (5) ; et
une ouverture de sortie (16) de préférence obturée par un clapet (17),
le dispositif de séparation (1) étant configuré pour fonctionner dans une séquence de transport, dans laquelle le matériau en vrac contaminé (2) est transporté par aspiration à travers la tubulure d'entrée (14) dans la zone d'entrée (5), dans une séquence d'aspiration à vide optionnelle, dans laquelle un fluide, en particulier de l'air, est aspiré à travers la tubulure d'entrée (14), et dans une séquence de vidange, dans laquelle le matériau en vrac nettoyé (2) est évacué par l'ouverture de sortie (16), la séquence de transport et, de préférence, la séquence d'aspiration à vide optionnelle formant une phase de transport,
**caractérisé en ce que**
la chambre de nettoyage (4) comprend une zone de recirculation (6) de préférence au moins partiellement de forme conique, et la zone d'entrée (5) et la zone de recirculation (6) sont disposées et configurées de telle sorte que le matériau en vrac contaminé (2), en fonctionnement du dispositif de séparation (1), est transporté par aspiration pendant la phase de transport de la zone d'entrée vers la zone de recirculation (6) et est continuellement brassé dans la zone de recirculation (6) jusqu'à la séquence de vidange par l'aspiration et ainsi nettoyé, les contaminants (24) qui se détachent du matériau en vrac contaminé (2) pouvant être aspirés de la zone de recirculation (6) par l'aspiration du matériau en vrac contaminé (2) pendant la phase de transport via une ouverture d'aspiration (20).

10. Dispositif de séparation (1) selon la revendication 9, **caractérisé en ce que** l'ouverture d'aspiration (20) est disposée sur une face supérieure (19) de la chambre de nettoyage (4), en particulier sur une face supérieure de la zone de recirculation (6), et est configurée comme un raccord pour un dispositif d'aspiration.

11. Dispositif de séparation (1) selon l'une des revendications 9 à 10, **caractérisé en ce que** la zone de recirculation comporte, de préférence sur la face inférieure, une ouverture d'entrée par laquelle le matériau en vrac contaminé pénètre dans la zone de recirculation, l'ouverture d'entrée étant en particulier disposée en dessous de la tubulure d'entrée.

12. Dispositif de séparation (1) selon la revendication 11, **caractérisé en ce qu'**un tube d'entrée (12) est raccordé à la zone de recirculation (6), l'ouverture d'entrée (13) étant disposée à l'extrémité du tube d'entrée tournée vers la face inférieure (50) de la chambre de nettoyage (4).

13. Dispositif de séparation (1) selon l'une des revendications 9 à 12, **caractérisé en ce que**, vu en coupe transversale de la chambre de nettoyage (4) et le long d'un axe de symétrie (7), en particulier axe longitudinal, de la chambre de nettoyage (4), la zone d'entrée (5) et la zone de recirculation (6) se chevauchent au moins partiellement.

14. Dispositif de séparation (1) selon l'une des revendications 9 à 13, **caractérisé en ce que**, vu en coupe transversale de la chambre de nettoyage (4), la zone d'entrée (5) et la zone de recirculation (6) comportent chacune une section convergente conique (10a, 10b) et un canal (27) pour le matériau en vrac contaminé (27) est formé dans la zone d'entrée (5) entre les sections convergentes coniques (10a, 10b) de la zone d'entrée (5) et de la zone de recirculation (6), de préférence la tubulure d'entrée (14) étant disposée, vue en coupe transversale de la chambre de nettoyage (14), à la hauteur de la section convergente conique (10b) de la zone de recirculation (6).

15. Installation pour la fabrication d'un produit en plastique, comprenant :
un dispositif d'aspiration ;
un dispositif de séparation (1) selon l'une des revendications 9 à 14, qui est relié au dispositif d'aspiration ;
une machine de transformation de plastique, en particulier une machine d'injection, qui est reliée au dispositif de séparation (1).
